# EUROPEAN PATENT SPECIFICATION

(11) **EP 3 949 717 B1**
(45) Date of publication and mention of the grant of the patent: **10.01.2024**
(21) Application number: 20190011.5
(22) Date of filing: 07.08.2020
(51) Int. Cl.: A01F 15/07

(54) **A MACHINE COMPRISING A COMBINATION OF A BALER AND A WRAPPING MACHINE**
MASCHINE MIT EINER KOMBINATION AUS EINER BALLENPRESSE UND EINER EINWICKLUNGSMASCHINE
MACHINE COMPRENANT UNE COMBINAISON D'UNE PRESSE À BALLES ET D'UNE MACHINE D'EMBALLAGE

(43) Date of publication of application: 09.02.2022
(73) Proprietor: De Vries, Gerard Cornelis, 3371 KC Hardinxveld-Giessendam (NL)
(72) Inventor: De Vries, Gerard Cornelis, 3371 KC Hardinxveld-Giessendam (NL)
(74) Representative: Plaggenborg, Menko Bernard

(56) References cited:
- EP-A1- 1 128 717
- EP-A2- 2 647 282
- WO-A1-94/27423
- WO-A1-98/44776
- DE-A1- 4 208 091

## Description

The present invention relates to a combination of a baler and a wrapping machine comprising the features according to the preamble of claim 1. Such a baler is known from EP2647282A.

It is known in the art to bale hay in a baler. To that end, a baler is placed on a wheeled chassis. Such machine is pulled by a tractor. Each bale of hay is positioned on the meadow after which a wrapping machine, pulled by another tractor, picks up said bale of hay, applies foil around it and places the wrapped bale of hay back on the meadow.

Accordingly, the state of the art requires two different machines with two tractors. This thus also requires two employees for baling and wrapping hay on a meadow.

As a matter of fact, mainly reference will be made to hay, whereas all kinds of natural or organic material that can be pressed into a bale should fall within this general term of "hay", like hay, straw, halms, thatch and the like.

Furthermore, mainly reference will be made to a meadow, whereas all kinds of fields on which any of the above mentioned materials may be present to be pressed into a bale should fall within this general term of "meadow", like pasture, meadow, grassland and the like.

A disadvantage of this known manner to bale and wrap hay is the large number of machines. Another disadvantage is found in the number of employees that is required to perform these tasks.

In addition, the use of two tractors induces a high usage of fuel, thus expelling large amounts of pollutants, such as nitrogen containing substances, for example nitrogen oxides.

Also, road space is used abundantly, such that traffic congestions occur, especially because of limited manoeuvrability of the combinations of multiple tractors, each with its own trailer.

The invention aims at providing an improved machine of the kind mentioned in the preamble.

The invention further aims at providing a machine that provides easy handling.

The invention also aims at providing a machine that produces a better wrapper bale.

The invention additionally aims at providing a machine that assists in baling and wrapping, providing the advantage that only a single tractor is required to perform these tasks.

Also, the invention aims at providing a machine that has less fuel consumption than solutions from the state of the art.

Furthermore, the invention aims at providing a machine that needs less space on the road when travelling to and from the meadow or field.

So as to obtain at least one of the above mentioned aims, the invention provides a machine as mentioned in claim 1. This machine has the advantage that it takes up little space on the road. This obtained due to the small footprint it has. Furthermore, only a singly combination of tractor and trailer is required, opposite to the state of the art where two such combinations are necessary.

It has also shown that the machine according to the present invention is easy to manoeuvre. Such synergistic effect is a surprising and advantageous effect.

The invention therefore relates to a machine for baling hay or another organic material, for example straw, halms and thatch, with a main frame comprising a first frame part carrying a baler, the machine being wherein the main frame furthermore comprises a second frame part carrying a wrapper, characterized in that the baler and wrapper are adjustable with respect to each other to adjust their mutual position between an active position and a storage position. By providing such adjustable embodiment, for example and preferably a slidable embodiment, the wrapper can be placed in a first position close to the baler during transport and storage, whereas the wrapper can be adjusted into a second position further away from the baler so as to be positioned in an active or working embodiment so as to provide sufficient clearance between the baler and wrapper to allow transport of baled hay from the baler to the wrapper. The machine according to the present invention only requires a single tractor to both bale and wrap hay. This provides the further advantage that the maneuverability of the machine is excellent both on the road and in the field collecting and baling and wrapping hay.

A simple and effective embodiment providing an adjustability is obtained when the first frame part comprises a first box girder and the second frame part comprises a second box girder, wherein one of the first and second box girder is placed in the other of the first and second box girder and wherein the first and second box girder are slidable with respect to each other.

The machine according to the present invention is easily transportable, preferably towable by a tractor, by providing same with wheels. A simple way of providing such transportability is [a] by mounting said main frame on a trailer chassis or [b] when said first frame constitutes a trailer chassis.

Further improvement in obtaining transportability is obtained when said chassis has steerable wheels. Improved maneuverability is obtained when at least one axis is steerable. Optimum axle load is obtained when the device has at least two or at least three axes. When the device has three axes, the first and third axes are preferably steerable to have a very good maneuverability.

An effective solution is obtained when said baler is mounted rigidly relative to said first frame and said wrapper is mounted slidable relative to said first frame. For, in such configuration the device is easily transportable by positioning same in a compact transport configuration by sliding the wrapper towards the baler, whereas the device can be brought into the active position easily as well, by sliding the wrapper away from the baler.

To be able to transport the baled hay towards the wrapper, preferably a bale conveyor is provided in between the baler and the wrapper for transporting a bale from said baler to said wrapper. Such conveyor may be a roller conveyor, a conveyor belt or any other suitable conveyor.

When such conveyor is provided, it is stille preferred that the wrapper is slidable with respect to the baler. To that end, the bale conveyor could be connected non-slidably with respect to the baler and wherein the wrapper comprises a longitudinal slot for receiving the conveyor in the storage position. When the wrapper is moved towards the baler, the conveyor is received within the slot.

According to another embodiment, for example when no such longitudinal slot is provided, the bale conveyor could be connected hingedly with respect to at least one of the first frame and second frame for moving the conveyor through a vertical plane. By moving the conveyor in a vertical plane, sufficient room may be obtained for wrapper to me transported towards the baler.

The device according to the present invention is engineered for producing so-called large bales, that is bales with a dimension of about 70*70*120 cm or 80*90*170 cm or larger. Especially for such large bales, the present device is unique since according to the state of the art, different devices were required to bale hay in one machine and wrap same in another machine. Only due to the movability of the wrapper with respect to the baler, the device according to the present invention can be made sufficiently small to allow road transport.

The wrapper preferably is configured as a wrapper wherein the bale is turned, during wrapping, along a substantially longitudinal axis of the device. In such configuration, the bale can be handled by the wrapper without the need of turning it. As a matter of fact, the roller arms carrying the rollers also extend in a longitudinal direction. Since such configuration would take up much but unnecessary room during transport, it is preferred that the wrapper comprises a roller frame with roller arms for rotating the bale, said roller frame or said roller arms being hingedly coupled relative to the first frame. As a result, the roller arms and the roller frame can be moved from a substantial horizontal position to a more vertical position. The roller arms and the roller frame as such than take up much less surface area allowing the device according to the invention to be transported safely on the road.

The wrapper is preferably embodied as comprising a satellite wrapper with two wrapper arms. In such wrapper both arms extend diametrically opposite each other from a central rotation axis. Such rotation axis may be part of a satellite frame. According to the invention it is preferred that at least one of said wrapper arms comprises a hinge or a retracting mechanism for moving said at least one wrapping arm between an active state and a collapsed state. This allows the wrapper to be placed in a collapsed, compact position, wherein said one arm is hinged and, as a consequence, both arms then are directed in the same or substantially the same direction if said hingeable arm is placed in said compact position.

If one of said arms is or if both arms are retractable, the wrapping foil comprising parts of the roller arms are moved towards the central rotation axis, such that the wrapping arms take up less space and less surface area if in the retracted, inactive and compact position. Such yields a machine that can be transported safely on the road.

As mentioned before, the satellite arms of the wrapper can be operatively connected to a satellite frame, said satellite frame being movable connected relative to the first frame for moving the satellite between an active state and a collapsed state. Such yields another option for obtaining a compact position of the wrapper.

According to a preferred embodiment, the machine according to the present invention, further comprises a wrapped bale conveyor that is positioned below the wrapper for placing wrapped bales on the ground. This allows a secure and safe way of placing the wrapped bales on the ground after the wrapping process has ended.

The wrapped bale conveyor preferably comprises a supporting roller at an end directing away from the first frame for supporting the wrapped bale conveyor on the ground. Such ensures a safe handling of the wrapped bale.

Hereafter, the invention will be further described by means of a drawing. The drawing shows in:
Fig. 1 a side view of the machine according to the present invention,
Fig. 2 a perspective view of a baler for use in the resent invention,
Fig. 3 a perspective top view from a tail side of a wrapper for use in the present invention,
Fig. 4 a perspective top view from a front side of a wrapper for use in the present invention,
Fig. 5 a side view of the machine with a wrapper installed on a chassis, and
Fig. 6 a perspective top view from a front side of a wrapper in a compact position.

The same and similar parts and features have been denoted by the same reference numerals in the figures. However, for ease of understanding the figures, not all parts that are required for a practical embodiment have been shown in the figures.

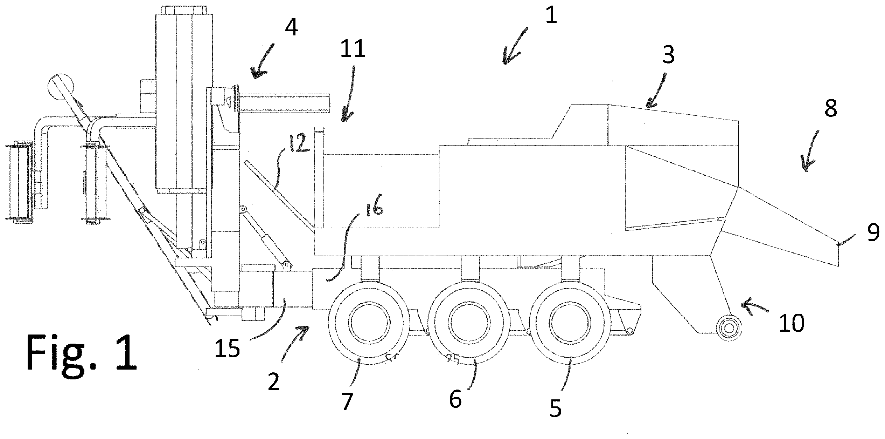

Fig. 1 shows a side view of a machine 1 according to the invention comprising a chassis 2 with baler 3 and a wrapper 4. The chassis 2 provided with three axes with wheels 5, 6, 7. For example, wheels 5, 7 may be steerable wheels. At the baler's front end 8 the chassis 2 may be provided with towing means 9 for towing same by tractor (not shown) at a position opposite the position of the wrapper 4. Also, a drive shaft is provided for coupling to a power output of the tractor for providing power to the baler 3. As a result, the baler does not need its own power supply. Hay or any other material that is to be baled is collected from the meadow and enters the baler 3 through a feed opening 10. After processing same a bale exit's the baler 3 at the baler's tail end 11 and is placed on a platform 12.

In Fig. 1 the wrapper 4 is placed in a so-called inactive compact position, which preferably is maintained during transport of the machine 1 on the road. The wrapper 4 is connected to the chassis 2 by means of a box girder 15 that is slidingly received in a box girder 16 being part of the chassis 2. In this Fig. 1 the box girder 15 is placed in a withdrawn position, wherein the wrapper 4 is placed closest to the baler 3.

Fig. 9 shows a more detailed view of the wrapper 4 of the machine 1 and will be described hereafter.

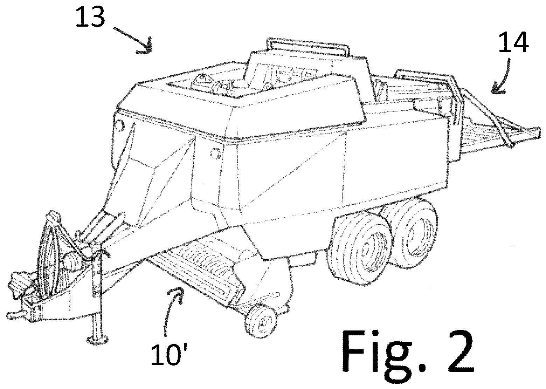

Fig. 2 shows a perspective view of a stand-alone baling machine 13 according to the state of the art. This known baling machine has its own chassis comprising two axes with wheels for towing same along a meadow or any other surface for collecting hay and the like through a feed opening 10'. Bales of hay exit the baling machine at its tail end 14.

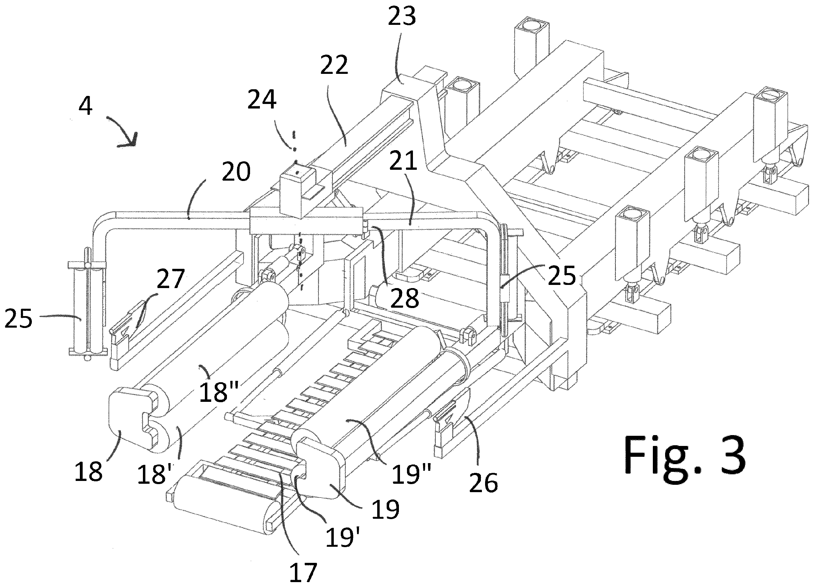

In Fig. 3 a perspective view of the wrapper 4 is shown. The wrapper 4 is in its operative position. A conveyor 17 is provided for transporting a bale from the baler 3 (not shown in Fig. 3) in a longitudinal direction towards a position between roller arms 18, 19. Roller arms 18, 19 are each provided with rollers 18', 18" and 19', 19" respectively. By rotating said rollers 18', 18", 19', 19" a bale that is positioned between and in contact with said rollers is rotated along a longitudinal axis. Also in Fig. 3, satellite arms 20, 21 are shown that are operatively connected to a satellite beam 22 that is movable coupled to a satellite frame 23 at an axis of rotation 24. The satellite arms 20, 21 are provided with connectors 25 for holding stock rolls with wrapping foil. The satellite arms perform a rotary movement around the rotating bale so as to complete cover the bale in wrapping foil. At the end of this action, after wrapping is completed, the foil is cut be means of cutters 26, 27.

In Fig. 3, satellite arm 21 has a hinge 28 for allowing a hinged bending of said arm 21. As a result, the satellite arm 21 can be moved between an active state and a collapsed state.

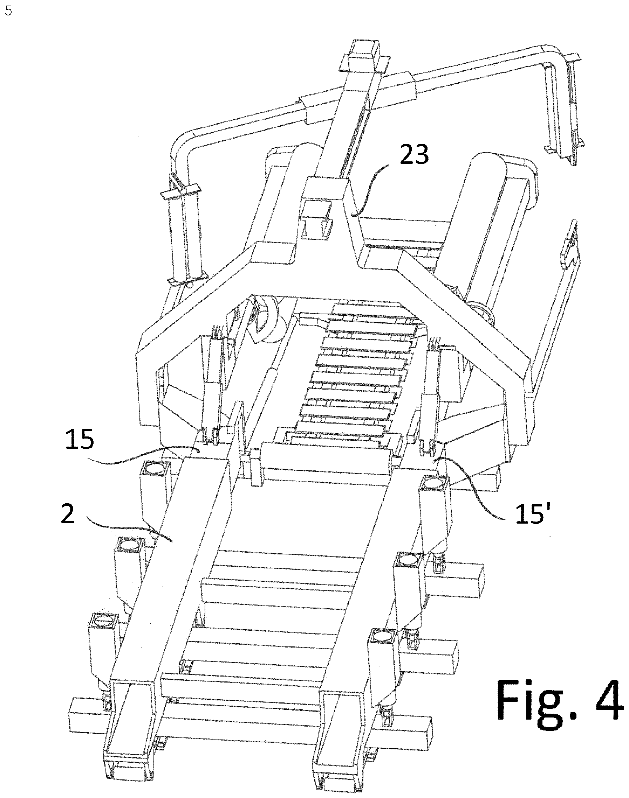

In Fig. 4 a perspective view of the wrapper 4 is shown. The satellite frame 23 is hingedly connected relative to the box girders 15, 15' and can be placed between the position shown in Fig. 4 and a position further away from the chassis 2 or closer to chassis 2 .

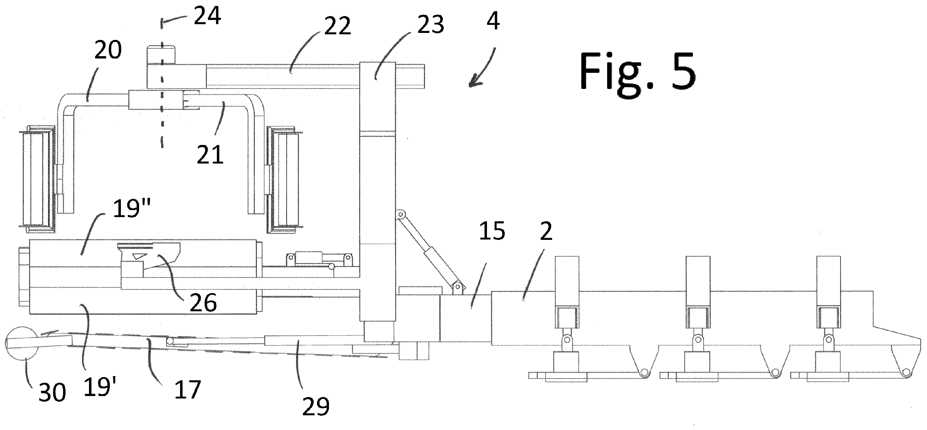

Fig. 5 shows a side view of the machine 1 with the wrapper 4. A hydraulic spring 29 is provided for moving the conveyor between the position as shown in Fig. 5 and the position shown in Fig. 1. The conveyor's elevated position as shown in Fig. 1 enables the machine to be transported easily since a smaller surface area is covered in the elevated position, whereas the position shown in Fig. 5 shows the active position. However, this hydraulic spring 29 is also capable of lowering the conveyor downwards so as to place a wrapped bale on the ground. To that end, a roller wheel 30 is provided for guiding the conveyor on the ground and smoothly delivering the wrapped bale on the ground.

Instead of the elevated position according to Fig. 1, the conveyor may be moved partly or completely to a position below the baler. This also provides a smaller surface area for easy transport of the machine according to the invention.

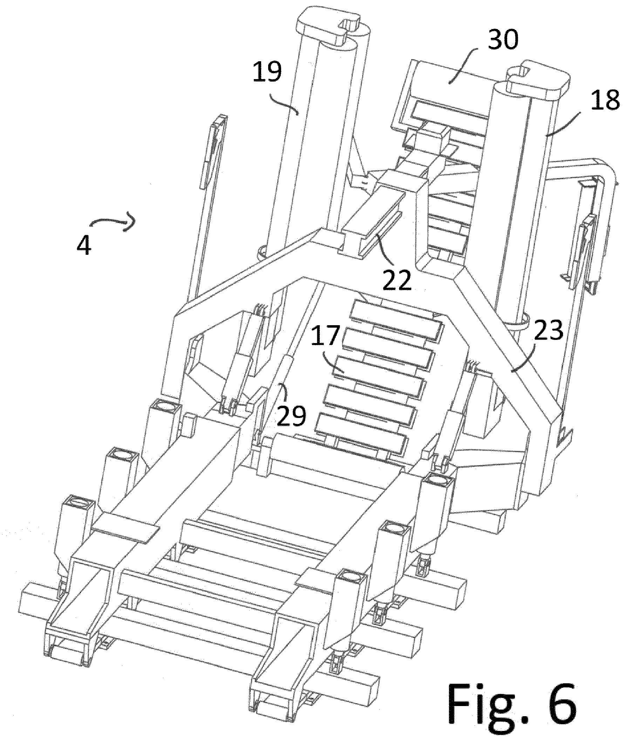

Finally, Fig. 6 shows a perspective view of the wrapper 4 in its inactive position. All components of the wrapper 4 are placed in an upward direction so as to take up less surface area. Transport on a road is therefore facilitated. More in particular, maneuvering and handling of the machine is easier in the position shown in Fig. 6.

The invention is not limited to the embodiments as mentioned above and as shown in the drawings. The invention is limited by the claims only.

## Claims

1. A machine (1) for baling an organic material, for example hay, straw, halms and thatch, with a main frame comprising a first frame part carrying a baler (3), wherein the main frame furthermore comprises a second frame part carrying a wrapper (4), **characterized in that** the baler (3) and wrapper (4) are adjustable with respect to each other to adjust their mutual position between an active position and a storage position, preferably slidable with respect to each other.

2. A machine (1) according to claim 1, wherein the first frame part comprises a first box girder (15) and the second frame part comprises a second box girder (16), wherein one (15) of the first and second box girder is placed in the other (16) of the first and second box girder and wherein the first and second box girder are slidable with respect to each other.

3. A machine (1) according to claim 1, wherein [a] said main frame is mounted on a trailer chassis (2) or [b] said first frame constitutes a trailer chassis (2).

4. A machine (1) according to claim 3, wherein said chassis (2) has steerable wheels.

5. A machine (1) according to claim 1, wherein said baler (3) is mounted rigidly relative to said first frame and said wrapper (4) is mounted slidably relative to said first frame.

6. A machine (1) according to claim 1, wherein a bale conveyor is provided in between the baler (3) and the wrapper (4) for transporting a bale from said baler to said wrapper.

7. A machine (1) according to claim 6, wherein the bale conveyor (17) is non-slidably connected with respect to the baler (3) and wherein the wrapper (4) comprises a longitudinal slot for receiving the conveyor (17) in the storage position.

8. A machine (1) according to claim 6, wherein the bale conveyor (17) is hingedly connected with respect to at least one of the first frame and second frame for moving the conveyor (17) through a vertical plane.

9. A machine (1) according to claim 1, wherein the baler (3) is embodied for producing bales with a dimension of 70*70*120 cm or 80*90*170 cm.

10. A machine (1) according to claim 1, wherein the wrapper (4) comprises a roller frame with roller arms (18, 19) for rotating the bale, said roller frame or said roller arms (18, 19) being hingedly coupled relative to the first frame.

11. A machine (1) according to any of the preceding claims, wherein the wrapper (4) comprises a satellite wrapper with two wrapper arms, wherein at least one of said wrapper arms comprises a hinge or a retracting mechanism for moving said at least one wrapping arm between an active state and a collapsed state.

12. A machine (1) according to claim 11, wherein the satellite arms (21) are operatively connected to a satellite frame (23), said satellite frame being movable connected relative to the first frame for moving the satellite between an active state and a collapsed state.

13. A machine (1) according to any of the preceding claims, wherein a wrapped bale conveyor is positioned below the wrapper for placing wrapped bales on the ground.

14. A machine (1) according to claim 13, wherein the wrapped bale conveyor comprises a supporting roller (30) at an end directing away from the first frame for supporting the wrapped bale conveyor on the ground.

## Patentansprüche

1. Vorrichtung (1) zum Verpacken von organischem Material, z.B. Heu, Stroh, Halme und Stroh, in Ballen, welche umfasst, einen Hauptrahmen mit einem ersten Rahmenteil, der eine Ballenpresse (3) trägt, worin der Hauptrahmen weiter ein zweites Rahmenteil umfasst, das eine Umhüllungsvorrichtung (4) trägt, **dadurch gekennzeichnet, dass** die Ballenpresse (3) und die Umhüllungsvorrichtung (4) in Bezug zueinander einstellbar sind, um ihre gegenseitige Position zwischen einer aktiven Position und einer Lagerposition einzustellen, vorzugsweise verschiebbar in Bezug zueinander.

2. Vorrichtung (1) nach Anspruch 1, worin das erste Rahmenteil einen ersten Kastenträger (15) und das zweite Rahmenteil einen zweiten Kastenträger (16) umfasst, worin einer (15) des ersten und zweiten Kastenträgers in dem anderen (16) des ersten und zweiten Kastenträgers angeordnet ist und worin der erste und zweite Kastenträger in Bezug zueinander verschiebbar sind.

3. Vorrichtung (1) nach Anspruch 1, worin [a] der Hauptrahmen auf ein Anhängerfahrgestell (2) montiert ist oder [b] der erste Rahmen ein Anhängerfahrgestell (2) bildet.

4. Vorrichtung (1) nach Anspruch 3, worin das Fahrgestell (2) lenkbare Räder aufweist.

5. Vorrichtung (1) nach Anspruch 1, worin die Ballenpresse (3) relativ zu dem ersten Rahmen starr montiert ist und die Umhüllungsvorrichtung (4) relativ zu dem ersten Rahmen verschiebbar befestigt ist.

6. Vorrichtung (1) nach Anspruch 1, worin zwischen die Ballenpresse (3) und die Umhüllungsvorrichtung (4) ein Ballenförderer vorgesehen ist, um einen Ballen von der Ballenpresse zur Umhüllungsvorrichtung zu transportieren.

7. Vorrichtung (1) nach Anspruch 6, wobei der Ballenförderer (17) in Bezug auf die Ballenpresse (3) nicht verschiebbar verbunden ist und worin die Umhüllungsvorrichtung (4) einen Längsschlitz zur Aufnahme des Förderers (17) in der Lagerposition aufweist.

8. Vorrichtung (1) nach Anspruch 6, worin der Ballenförderer (17) in Bezug auf den ersten Rahmen und/oder den zweiten Rahmen gelenkig verbunden ist, um den Förderer (17) durch eine vertikale Ebene zu bewegen.

9. Vorrichtung (1) nach Anspruch 1, worin die Ballenpresse (3) zur Herstellung von Ballen mit einer Größe von 70*70*120 cm oder 80*90*170 cm ausgebildet ist.

10. Vorrichtung (1) nach Anspruch 1, worin die Umhüllungsvorrichtung (4) einen Walzenrahmen mit Walzenarmen (18, 19) zum Drehen des Ballens umfasst, worin der Walzenrahmen oder die Walzenarme (18, 19) relativ zu dem ersten Rahmen gelenkig gekoppelt sind.

11. Vorrichtung (1) nach einem der vorhergehenden Ansprüche, worin die Umhüllungsvorrichtung (4) eine Satelliten-Umhüllungsvorrichtung mit zwei Wickelarmen umfasst, worin mindestens einer der Wickelarme ein Scharnier oder einen Rückzugsmechanismus zum Bewegen des mindestens einen Wickelarms zwischen einem aktiven Zustand und einem zusammengeklappten Zustand umfasst.

12. Vorrichtung (1) nach Anspruch 11, worin die Satellitenarme (21) betriebsbereit mit einem Satellitenrahmen (23) verbunden sind, worin der Satellitenrahmen relativ zu dem ersten Rahmen beweglich verbunden ist, um den Satelliten zwischen einem aktiven Zustand und einem zusammengeklappten Zustand zu bewegen.

13. Vorrichtung (1) nach einem der vorstehenden Ansprüche, wobei ein Förderer für eingewickelte Ballen unterhalb der Umhüllungsvorrichtung angeordnet ist, um eingewickelte Ballen auf den Boden zu legen.

14. Vorrichtung (1) nach Anspruch 13, worin der Förderer für eingewickelte Ballen eine Stützrolle (30) an einem von dem ersten Rahmen wegweisenden Ende zum Abstützen des Förderers für eingewickelte Ballen auf dem Boden aufweist.

## Revendications

1. - Machine (1) pour la mise en balle d'une matière organique, par exemple du foin, de la paille, des fanes et de la chaume, avec un châssis principal comprenant une partie premier châssis portant une presse à balles (3), le châssis principal comprenant en outre une partie second châssis portant une enveloppeuse (4), **caractérisée par le fait que** la presse à balles (3) et l'enveloppeuse (4) sont réglables l'une par rapport à l'autre pour régler leur position mutuelle entre une position active et une position de stockage, de préférence aptes à coulisser l'une par rapport à l'autre.

2. - Machine (1) selon la revendication 1, dans laquelle la partie premier châssis comprend une première poutre en caisson (15) et la partie second châssis comprend une seconde poutre en caisson (16), l'une (15) des première et seconde poutres en caisson étant placée dans l'autre (16) des première et seconde poutres en caisson et les première et secondes poutres en caisson étant aptes à coulisser l'une par rapport à l'autre.

3. - Machine (1) selon la revendication 1, dans laquelle [a] ledit châssis principal est monté sur un châssis de remorque (2) ou [b] ledit premier châssis constitue un châssis de remorque (2) .

4. - Machine (1) selon la revendication 3, dans laquelle ledit châssis (2) a des roues directrices.

5. - Machine (1) selon la revendication 1, dans laquelle ladite presse à balles (3) est montée de manière rigide par rapport audit premier châssis et ladite enveloppeuse (4) est montée de manière coulissante par rapport audit premier châssis.

6. - Machine (1) selon la revendication 1, dans laquelle un transporteur de balles est disposé entre la presse à balles (13) et l'enveloppeuse (4) pour transporter une balle de ladite presse à balles à ladite enveloppeuse.

7. - Machine (1) selon la revendication 6, dans laquelle le transporteur de balles (17) est relié de manière non coulissante par rapport à la presse à balles (3) et l'enveloppeuse (4) comprend une fente longitudinale pour recevoir le transporteur (17)

8. - Machine (1) seron ld revendication 6, dans laquelle le transporteur de balles (17) est relié de manière articulée par rapport à au moins un du premier châssis et du second châssis pour déplacer le transporteur (17) à travers un plan vertical.

9. - Machine (1) selon la revendication 1, dans laquelle la presse à balles (3) est mise en œuvre pour produire des balles ayant une dimension de 70*70*120 cm ou 80*90*170 cm.

10. - Machine (1) selon la revendication 1, dans laquelle l'enveloppeuse (4) comprend un châssis à rouleaux avec des bras à rouleaux (18, 19) pour faire tourner la balle, ledit châssis à rouleaux ou lesdits bras à rouleaux (18, 19) étant couplé(s) de manière articulée par rapport au premier châssis.

11. - Machine (1) selon l'une quelconque des revendications précédentes, dans laquelle l'enveloppeuse (4) est une enveloppeuse à satellite ayant deux bras d'enveloppeuse, au moins un des bras d'enveloppeuse comprenant une articulation ou un mécanisme de rétraction pour déplacer ledit au moins un bras d'enveloppeuse entre un état actif et un état replié.

12. - Machine (1) selon la revendication 11, dans laquelle les bras satellites (21) sont reliés de manière fonctionnelle à un châssis à satellite (23), ledit châssis à satellite étant relié de manière mobile au premier châssis pour déplacer le satellite entre un état actif et un état replié.

13. - Machine (1) selon l'une quelconque des revendications précédentes, dans laquelle un transporteur de balles enveloppées est positionné au-dessous de l'enveloppeuse pour placer sur le sol des balles enveloppées.

14. - Machine (1) selon la revendication 13, dans laquelle le transporteur de balles enveloppées comprend un rouleau de support (30) à une extrémité dirigée à l'opposé du premier châssis pour supporter le transport de balles enveloppées sur le sol.
